# EUROPEAN PATENT SPECIFICATION

(11) **EP 4 083 089 B1**
(45) Date of publication and mention of the grant of the patent: **25.11.2026**
(21) Application number: 20905440.2
(22) Date of filing: 16.12.2020
(51) Int. Cl.: C08F 255/02, C08L 23/10, C08L 51/06, C08J 9/16, C08J 9/12, C08J 9/232

(54) **POLYPROPYLENE RESIN COMPOSITION, METHOD FOR PRODUCING SAME, METHOD FOR PRODUCING PRE-FOAMED PARTICLES, AND METHOD FOR PRODUCING FOAM MOLDED ARTICLES**
POLYPROPYLENHARZZUSAMMENSETZUNG, VERFAHREN ZU DEREN HERSTELLUNG, VERFAHREN ZUR HERSTELLUNG VORGESCHÄUMTER TEILCHEN UND VERFAHREN ZUR HERSTELLUNG VON SCHAUMFORMTEILEN
COMPOSITION DE RÉSINE DE POLYPROPYLÈNE, PROCÉDÉ DE FABRICATION ASSOCIÉ, PROCÉDÉ DE FABRICATION DE PARTICULES PRÉALABLEMENT EXPANSÉES, ET PROCÉDÉ DE PRODUCTION D'ARTICLES MOULÉS EN MOUSSE

(30) Priority: 23.12.2019 JP 2019231887
(43) Date of publication of application: 02.11.2022
(73) Proprietor: Kaneka Corporation, Osaka-shi, Osaka 530-8288 (JP)
(72) Inventor: AMANO, Masaki, Osaka 566-0072 (JP)
(74) Representative: Vossius & Partner Patentanwälte Rechtsanwälte mbB
(86) International application number: PCT/JP2020/046870
(87) International publication number: WO 2021/131933

(56) References cited:
- EP-A1- 3 489 287
- WO-A1-2017/164343
- JP-A- 2001 328 155
- JP-A- 2001 328 155
- JP-A- 2004 331 722
- JP-A- 2004 331 722
- JP-A- 2009 214 372
- JP-A- 2009 214 372
- JP-A- 2016 155 890
- JP-A- 2017 179 281
- JP-A- 2019 059 861
- JP-A- 2019 163 347
- JP-A- H11 147 967

## Description

### Technical Field

The present invention relates to a method for producing polypropylene-resin pre-expanded particles, and a method for producing a polypropylene-resin in-molded article using the polypropylene-resin pre-expanded particles obtained by such a method.

### Background Art

An in-molded article obtained by using polypropylene-resin pre-expanded particles is characterized by being formable in a desired shape and having cushioning properties, lightweight properties, and heat-insulating properties. Also, the base material of the in-molded article is constituted by a polypropylene resin, and thus the chemical resistance, thermal resistance, compression strength, and compression strain recovery thereof are excellent. The in-molded article obtained using polypropylene-resin pre-expanded particles has these characteristics, and is thus used in various applications such as heat insulating materials, and cushioning packaging materials, such as automobile interior members and bumper core.

The polypropylene-resin pre-expanded particles used to obtain a polypropylene-resin in-molded article are generally obtained using a technique that is known as a "pressure-release expansion" performed as follows. That is, polypropylene-resin particles are dispersed together with a volatile foaming agent in water inside a pressure vessel, the obtained dispersion is heated to a temperature close to the melting point of the polypropylene resin to impregnate the polypropylene-resin particles with the foaming agent, and the dispersion containing the polypropylene-resin particles and water is released to an atmosphere in which the pressure is lower than that inside the pressure vessel while the inside of the pressure vessel is pressurized to pressure higher than or equal to the steam pressure of the foaming agent and the temperature and pressure inside the pressure vessel are kept constant.

The polypropylene-resin pre-expanded particles obtained using the pressure-release expansion can be easily molded into an in-molded article through in-mold molding in which steam is used, and thus a useful in-molded article having the characteristics described above can be obtained.

On the other hand, in the process for producing pre-expanded particles using the pressure-release expansion, a pelletization step, that is, a step of producing pellets having a suitable size for expansion, is performed using an extruder, and then an expansion step is performed inside a pressure vessel. Therefore, there are problems in that, for example, capital investment tends to increase because it is necessary to perform two steps to obtain pre-expanded particles, and wastewater treatment equipment is required because a dispersion medium such as water is used.

In recent years, it has been proposed to use an extrusion foaming process to obtain polypropylene-resin pre-expanded particles, for the purpose of overcoming such problems.

Patent Document 1 discloses a method for obtaining expanded particles through extrusion foaming process using a modified polypropylene resin that is obtained by melt-kneading an aromatic vinyl monomer and/or isoprene monomer and a radical generator with a polypropylene resin and is provided with elongational viscosity characteristics to exhibiting high melt elasticity.

Patent Document 2 discloses pre-expanded particles having excellent moldability obtained using an extrusion foaming process in which a base material containing a low-melting-point random polypropylene resin as a main ingredient and a propylene homopolymer as a secondary ingredient is used.

Patent Document 3 discloses pre-expanded particles having a low internal open cell ratio and excellent moldability obtained using an extrusion foaming process in which a polypropylene resin provided with specific viscoelastic characteristics is used as a base material.

Patent Document 4 discloses pre-expanded particles in which a propylene homopolymer having specific viscoelastic characteristics is used as a base material, and use of steam at 165°C (corresponding to about 0.61 MPa) in in-mold molding of the pre-expanded particles.

Patent Document 5 discloses pre-expanded particles having specific melt tension in which a propylene homopolymer having a linear molecular structure is used as a base material, and use of steam of 4.5 kg/cm² (0.45 MPa) in in-mold molding of the pre-expanded particles.

Patent Document 6 discloses pre-expanded particles obtained using an extrusion foaming process in which a resin composition containing a propylene-olefin copolymer having specific intrinsic viscosity and an ethylene homopolymer or ethylene-olefin copolymer having specific intrinsic viscosity is used as a base resin, and in-mold molding of the pre-expanded particles with steam at 145°C (corresponding to about 0.41 MPa).

Patent Document 7 discloses a method for producing pre-expanded polypropylene-based resin particles, the pre-expanded polypropylene-based resin particles comprising a polypropylene-based resin that satisfies Expression (1): $tan δ \leq 0.32 \times V + 0.1$ (1) wherein tan δ represents a loss tangent at an angular frequency of 0.1 rad/s in dynamic viscoelastic behavior measurement at 200°C; and V represents a melt fracture take-up speed (m/min) at 200°C.

### Citation List

### Patent Documents

Patent Document 1: JP H9-302131A
Patent Document 2: JP 2009-256460A
Patent Document 3: WO 2018/016399
Patent Document 4: JP H6-234878A
Patent Document 5: JP 2007-308560A
Patent Document 6: JP 2000-159922A
Patent Document 7: EP 3 489 287 A1

### Summary of Invention

### Problem to be Solved by the Invention

However, the expanded particles obtained in Patent Document 1 have a low density and a high closed cell ratio, but are disadvantageous in that they don't necessarily have excellent moldability.

The in-molded article obtained in Patent Document 2 is disadvantageous in that it has insufficient strength due to the use of a low-melting-point random polypropylene resin as the main ingredient of the base material.

The in-molded article obtained in Patent Document 3 is also disadvantageous in that it has insufficient strength due to the use of random polypropylene as the base material.

Patent Documents 4 to 6 have a problem in that, when pre-expanded particles are molded using steam, the temperature and the pressure of the steam need to be further increased, and thus utility costs significantly increase. Furthermore, because the withstand pressure of in-mold molding machines, which are widely-used molding machines, is as low as 0.40 MPa or less in many cases, the melting point of a polypropylene resin capable of being used as a base material is limited under the current circumstances.

In order to solve the foregoing conventional problems, a specific polypropylene-resin composition is used in the present invention as a base material when manufacturing polypropylene-resin pre-expanded particles through extrusion foaming process to achieve both of the following goals at a high level: the polypropylene-resin pre-expanded particles have a high closed cell ratio, exhibit favorable moldability, and can be molded at low steam pressure, which is required for in-mold molding; and a polypropylene-resin in-molded article having high strength can be obtained by using such particles. The present invention provides
a method for producing polypropylene-resin pre-expanded particles, and a method for producing a polypropylene-resin in-molded article, as defined in the claims.

### Means for Solving Problem

The present invention relates to a method for producing polypropylene-resin pre-expanded particles, including a step of obtaining polypropylene-resin pre-expanded particles through extrusion foaming process using a polypropylene resin composition, as defined in claim 1.

Furthermore, the present invention relates to a method for producing a polypropylene-resin in-molded article, including a step of obtaining a polypropylene-resin in-molded article through steam-molding the polypropylene-resin pre-expanded particles obtained using the above method for producing polypropylene-resin pre-expanded particles, as defined in claim 14.

### Effects of the Invention

By using in the present invention a specific polypropylene-resin composition
as a base material,when manufacturing polypropylene-resin pre-expanded particles through extrusion foaming process, both of the following goals can be achieved at a high level: the obtained polypropylene-resin pre-expanded particles have a high closed cell ratio, exhibit favorable moldability, and can be molded at low steam pressure, which is required for in-mold molding; and a polypropylene-resin in-molded article having high strength can be obtained using the pre-expanded particles.

With the method for producing a polypropylene resin composition according to one or more embodiments as described herein, it is possible to obtain a polypropylene resin composition that can be used as a base material in extrusion foaming process to manufacture pre-expanded particles that have a high closed cell ratio, exhibit favorable moldability, and can be formed into an in-molded article having a high strength at low steam pressure.

With the method for producing polypropylene-resin pre-expanded particles according to one or more embodiments of the present invention, it is possible to obtain pre-expanded particles that have a high closed cell ratio, exhibit favorable moldability, and can be formed into an in-molded article having a high strength at low steam pressure.

With the method for producing a polypropylene-resin in-molded article according to one or more embodiments of the present invention, it is possible to mold an in-molded article having a high strength at low steam pressure.

### Disclosure of Invention

As a result of extensive research conducted in view of the foregoing problems, the inventor of the present invention found that, by using, as a base material, a polypropylene resin composition having (1) a melt tension at 230°C (also referred to merely as a "melt tension" hereinafter) of 2.94 cN or more and 19.6 cN or less, (2) a melting point Tm higher than 150°C and lower than 159°C, the melting point being measured through differential scanning calorimetry, (3) a cold crystallization temperature Tc of 122°C or higher and lower than 130°C, the cold crystallization temperature being measured through differential scanning calorimetry, and (4) an amount of melting heat ΔH of 85 J/g or more and less than 100 J/g, the amount of melting heat being measured through differential scanning calorimetry, polypropylene-resin pre-expanded particles (also referred to merely as "expanded particles" hereinafter) that can achieve both of the following goals can be obtained through extrusion foaming process: the polypropylene-resin pre-expanded particles have a high closed cell ratio, exhibit favorable moldability, and can be molded at low steam pressure, which is required in in-mold molding; and the strength of a polypropylene-resin in-molded article (also referred to merely as an "in-molded article" hereinafter) can be enhanced.

In one or more embodiments of the present invention, the used polypropylene resin composition has a melt tension of 2.94 cN or more and 19.6 cN or less. When the polypropylene resin composition has a melt tension within the above-described range, expanded particles having a low open cell ratio can be obtained through an extrusion foaming process, and the expanded particles have favorable moldability. The melt tension of the polypropylene resin composition is more preferably 3.0 cN or more, even more preferably 4.0 cN or more, and particularly preferably 5.0 cN or more. Also, the melt tension of the polypropylene resin composition is preferably 15.0 cN or less, and more preferably 13.0 cN or less. The melt tension of the polypropylene resin composition can be measured using a method described in Examples.

In one or more embodiments of the present invention, the used polypropylene resin composition has a melting point Tm higher than 150°C and lower than 159°C. Thus, the moldability of expanded particles obtained through an extrusion foaming process is improved, and the strength of an in-molded article can be enhanced. The melting point Tm of the polypropylene resin composition is preferably 152°C or higher and more preferably 153°C or higher from the viewpoint of further enhancing the strength of the in-molded article.

In one or more embodiments of the present invention, the used polypropylene resin composition has a cold crystallization temperature Tc of 122°C or higher and lower than 130°C. Thus, expanded particles having a low open cell ratio are obtained through an extrusion foaming process, the moldability of the expanded particles is improved, and the strength of an in-molded article can be enhanced. The cold crystallization temperature Tc of the polypropylene resin composition is preferably 123°C or higher.

In one or more embodiments of the present invention, the used polypropylene resin composition has an amount of melting heat ΔH of 85 J/g or more and less than 100 J/g. Thus, expanded particles having a low open cell ratio are obtained through an extrusion foaming process, the moldability of the expanded particles is improved, and the strength of an in-molded article can be enhanced. The amount of melting heat ΔH of the polypropylene resin composition is preferably 88 J/g or more and more preferably 91 J/g or more from the viewpoint of enhancing the strength of the in-molded article.

In one or more embodiments of the present invention, a mm-fraction of the propylene triad of the used polypropylene resin composition measured through ¹³C-NMR (also referred to merely as a "mm-fraction" hereinafter) is preferably less than 96%, more preferably 95% or less, and even more preferably 94% or less. Thus, the moldability of expanded particles obtained through an extrusion foaming process is improved. On the other hand, the mm-fraction of the polypropylene resin composition is preferably 91% or more and more preferably 92% or more from the viewpoint of further enhancing the strength of an in-molded article.

In one or more embodiments of the present invention, the melt flow rate (MFR) of the used polypropylene resin composition is preferably 1 g/10 minutes or more and 20 g/10 minutes or less, more preferably 1.5 g/10 minutes or more and 15 g/10 minutes or less, and even more preferably 2 g/10 minutes or more and 12 g/10 minutes or less. When the polypropylene resin composition has a MFR within the above-described range, expanded particles can be favorably obtained through an extrusion foaming process.

In one or more embodiments of the present invention, the used polypropylene resin composition is not particularly limited, but is preferably manufactured by, for example, melt-kneading a polypropylene resin, one or more monomers selected from the group consisting of conjugated diene compounds and aromatic vinyl compounds, and a radical polymerization initiator at a temperature at which the polypropylene resin melts and the radical polymerization initiator decomposes, and extruding the melted composition.

When the above-described production method is used, a polypropylene resin composition that contains a polypropylene resin having a branched structure in which the main chain is constituted by a polypropylene resin and the side chains include constitutional units derived from one or more monomers selected from the group consisting of conjugated diene compounds and aromatic vinyl compounds is likely to be obtained. Moreover, the polypropylene resin composition is likely to satisfy the above-described ranges of the melt tension, the melting point Tm, the cold crystallization temperature Tc, the amount of melting heat ΔH, and the mm-fraction.

A linear polypropylene resin can be favorably used as the polypropylene resin, and specific examples thereof include propylene homopolymers, propylene block copolymers, and propylene random copolymers. The propylene copolymer preferably contains propylene in an amount of 75 mass% or more because the crystalizability, rigidity, and chemical resistance, which characterize polypropylene resins, are retained. Examples of monomers that can be copolymerized with propylene include: α-olefins having 2 or 4 to 12 carbon atoms such as ethylene, 1-butene, isobutene, 1-pentene, 3-methyl-1-butene, 1-hexene, 4-methyl-1-pentene, 3,4-dimethyl-1-butene, 1-heptene, 3-methyl-1-hexene, 1-octene, and 1-decene; cyclic olefins such as cyclopentene, norbornene, and tetracyclo[6,2,11,8,13,6]-4-dodecene; dienes such as 5-methylene-2-norbornene, 5-ethylidene-2-norbornene, 1,4-hexadiene, methyl-1,4-hexadiene, and 7-methyl-1,6-octadiene; and vinyl monomers such as vinyl chloride, vinylidene chloride, acrylonitrile, vinyl acetate, acrylic acid, methacrylic acid, maleic acid, ethyl acrylate, butyl acrylate, methyl methacrylate, maleic anhydride, styrene, methyl styrene, vinyltoluene, and divinylbenzene. In particular, ethylene and 1-butene are preferable from the viewpoint of improvement in cold brittleness resistance and low cost. These substances may be used alone or in combination of two or more. The polypropylene resin is preferably a propylene homopolymer from the viewpoint that a polypropylene resin composition that satisfies the above-described melt tension, melting point Tm, cold crystallization temperature Tc, amount of melting heat ΔH, and mm-fraction is likely to be obtained.

The MFR of the polypropylene resin is not particularly limited, but is preferably 1 g/10 minutes or more and 20 g/10 minutes or less, more preferably 1.5 g/10 minutes or more and 15 g/10 minutes or less, and even more preferably 2 g/10 minutes or more and 12 g/10 minutes or less. This makes it easy to adjust the MFR of the polypropylene resin composition to be within the above-described range.

The melting point Tm of the polypropylene resin is not particularly limited, but is preferably 145°C or higher and 165.5°C or lower, more preferably 155°C or higher and 165°C or lower, and even more preferably 160°C or higher and 165°C or lower. This makes it easy to adjust the melt tension, the melting point Tm, the cold crystallization temperature Tc, the amount of melting heat ΔH, and the mm-fraction of the polypropylene resin composition, especially the melting point Tm thereof, to be within the above-described ranges.

The cold crystallization temperature Tc of the polypropylene resin is preferably 110°C or higher and 125°C or lower, and more preferably 113°C or higher and 120°C or lower. This makes it easy to adjust the melt tension, the melting point Tm, the cold crystallization temperature Tc, the amount of melting heat ΔH, and the mm-fraction of the polypropylene resin composition, especially the cold crystallization temperature Tc thereof, to be within the above-described ranges.

The amount of melting heat ΔH of the polypropylene resin is preferably 95 J/g or more and 120 J/g or less, and more preferably 100 J/g or more and 120 J/g or less. This makes it easy to adjust the melt tension, the melting point Tm, the cold crystallization temperature Tc, the amount of melting heat ΔH, and the mm-fraction of the polypropylene resin composition, especially the amount of melting heat ΔH thereof, to be within the above-described ranges.

The mm-fraction of the polypropylene resin is not particularly limited, but is preferably 96% or more and 97% or less. This makes it easy to adjust the melt tension, the melting point Tm, the cold crystallization temperature Tc, the amount of melting heat ΔH, and the mm-fraction of the polypropylene resin composition, especially the mm-fraction thereof, to be within the above-described ranges.

Examples of the conjugated diene compounds used as the monomer include butadiene, isoprene, 1,3-heptadiene, 2,3-dimethylbutadiene, and 2,5-dimethyl-2,4-hexadiene.

Examples of the aromatic vinyl compounds used as the monomer include: styrene; methylstyrenes such as o-methylstyrene, m-methylstyrene, p-methylstyrene, α-methylstyrene, β-methylstyrene, dimethylstyrene, and trimethylstyrene; chlorostyrenes such as α-chlorostyrene, β-chlorostyrene, o-chlorostyrene, m-chlorostyrene, p-chlorostyrene, dichlorostyrene, and trichlorostyrene; bromostyrenes such as o-bromostyrene, m-bromostyrene, p-bromostyrene, dibromostyrene, and tribromostyrene; fluorostyrenes such as o-fluorostyrene, m-fluorostyrene, p-fluorostyrene, difluorostyrene, and trifluorostyrene; nitrostyrenes such as o-nitrostyrene, m-nitrostyrene, p-nitrostyrene, dinitrostyrene, and trinitrostyrene; vinylphenols such as o-hydroxystyrene, m-hydroxystyrene, p-hydroxystyrene, dihydroxystyrene, and trihydroxystyrene; divinylbenzenes such as o-divinylbenzene, m-divinylbenzene, and p-divinylbenzene; and isopropenylstyrenes such as o-diisopropenylbenzene, m-diisopropenylbenzene, and p-diisopropenylbenzene. In particular, styrene and/or methylstyrene is preferable from the viewpoint of improving the closed cell ratio and the expansion ratio of an in-molded article.

Out of the above-described monomers, the conjugated diene compounds are preferable, and butadiene and/or isoprene is particularly preferable because it is inexpensive and easy to handle, and facilitates the uniform progress of the reaction.

The conjugated diene compounds may be used together with a copolymerizable monomer, and examples of such a monomer include vinyl chloride, vinylidene chloride, acrylonitrile, methacrylonitrile, acrylamide, methacrylamide, vinyl acetate, acrylic acid, methacrylic acid, maleic acid, maleic anhydride, metal salts of acrylic acid, metal salts of methacrylic acid, acrylates such as methyl acrylate, ethyl acrylate, butyl acrylate, 2-ethylhexyl acrylate, and stearyl acrylate, and methacrylates such as methyl methacrylate, ethyl methacrylate, butyl methacrylate, 2-ethylhexyl methacrylate, and stearyl methacrylate.

The amount of the monomer added to 1 kg of the polypropylene resin is preferably 0.04 mol or more and 0.14 mol or less, more preferably 0.05 mol or more and 0.13 mol or less, and even more preferably 0.06 mol or more and 0.12 mol or less. Thus, a polypropylene resin composition that satisfies the above-described melt tension, melting point Tm, cold crystallization temperature Tc, amount of melting heat ΔH, and mm-fraction is likely to be obtained.

The amount of the monomer such as the conjugated diene compound added to 100 parts by mass of the polypropylene resin is preferably 0.05 parts by mass or more and 1.5 parts by mass or less, and more preferably 0.1 parts by mass or more and 0.9 parts by mass or less. When the addition amount of the conjugated diene compound is within the above-described range, a polypropylene resin composition that satisfies the above-described melt tension, melting point Tm, cold crystallization temperature Tc, amount of melting heat ΔH, and mm-fraction is likely to be obtained.

Common examples of the radical polymerization initiator include peroxides and azo compounds, and it is preferable to use an organic peroxide from the viewpoint that a polypropylene resin composition that satisfies the above-described melt tension, melting point Tm, cold crystallization temperature Tc, amount of melting heat ΔH, and mm-fraction is likely to be obtained, and it is particularly preferable to use a peroxyester or peroxydicarbonate from the viewpoint that branches can be effectively formed by adding only a small amount of peroxyester or peroxydicarbonate. Preferable examples of the peroxyester include cumyl peroxyneodecanoate, 1,1,3,3-tetramethylbutyl peroxyneodecanoate, t-hexyl peroxyneodecanoate, t-butyl peroxyneodecanoate, t-hexyl peroxypivalate, t-butyl peroxypivalate, 1,1,3,3-tetramethylbutyl peroxy-2-ethylhexanoate, 2,5-dimethyl-2,5-di(2-ethylhexanoyl peroxy)hexane, t-hexyl peroxy-2-ethylhexanoate, t-butyl peroxy-2-ethylhexanoate, t-hexyl peroxyisopropylmonocabonate, t-butyl peroxy3,5,5-trimethyl hexanoate, t-butyl peroxylaurate, t-butyl peroxyisopropylmonocarbonate, t-butyl peroxy-2-ethylhexylmonocarbonate, t-hexyl peroxybenzoate, 2,5-dimethyl-2,5-di(benzoyl peroxy)hexane, t-butyl peroxyacetate, t-butyl peroxy-3-methylbenzoate, and t-butyl peroxybenzoate. Preferable examples of the peroxydicarbonate include, but are not particularly limited to, di-normal-propyl peroxydicarbonate, diisopropyl peroxydicarbonate, di(4-t-butylcyclohexyl) peroxydicarbonate, di(2-ethylhexyl) peroxydicarbonate, di-sec-butyl peroxydicarbonate, and dicetyl peroxydicarbonate. These substances may be used alone or in combination of two or more.

The amount of the radical polymerization initiator added to 100 parts by mass of the polypropylene resin is preferably 0.05 parts by mass or more and 3 parts by mass or less, and more preferably 0.1 parts by mass or more and 2.5 parts by mass or less. When the addition amount of the radical polymerization initiator is within the above-mentioned range, the monomer can be efficiently copolymerized with the polypropylene resin, as side chains. Thus, a polypropylene resin composition that satisfies the above-described ranges of the melt tension, the melting point Tm, cold crystallization temperature Tc, the amount of melting heat ΔH, and the mm-fraction is likely to be obtained.

Examples of an equipment for reacting the polypropylene resin, the monomer, and the radical polymerization initiator include kneading machines such as a roll, a co-kneader, a bunbury mixer, a Brabender mixer, a single-screw extruder, and a twin-screw extruder; horizontal agitators such as a twin-screw surface renewal machine and a twin-screw multi-disc equipment; and vertical agitators such as a double-helical ribbon agitator. Out of these equipment, it is preferable to use the kneading machine. In particular, an extruder such as a single-screw extruder or twin-screw extruder is preferable from the viewpoint of productivity.

There is no particular limitation on the order of mixing and kneading (agitating) the polypropylene resin, the monomer, and the radical polymerization initiator, and a method for mixing and kneading (agitating) the polypropylene resin, the monomer, and the radical polymerization initiator. The polypropylene resin, the monomer, and the radical polymerization initiator may be mixed and then melt-kneaded, or the monomer and the radical initiator may be simultaneously or separately mixed with the previously melt-kneaded polypropylene resin at a time or over several times, or the monomer may be mixed with the previously melt-kneaded polypropylene resin and radical polymerization initiator at a time or over several times.

It is sufficient that the temperature in the kneading machine is set to a temperature at which the polypropylene resin melts and the radical polymerization initiator decomposes. Melt-kneading can be preferably performed at a temperature of 150°C or higher and 300°C or lower. In general, the melt-kneading is preferably performed for 1 minute or longer and 60 minutes or shorter.

The obtained polypropylene resin composition can contain alcohol derived from the radical polymerization initiator. Specifically, the polypropylene resin composition can contain one or more types of alcohol selected from the group consisting of t-butyl alcohol and isopropanol derived from the radical polymerization initiator. Alcohol present in the polypropylene resin composition can be confirmed using, for example, a method in which pellets of the polypropylene resin composition are freeze-crushed to prepare a sample, and a gas component generated when the sample is heated to 150°C is analyzed through a GC-MS technique.

In the present invention, the polypropylene-resin pre-expanded particles are obtained through an extrusion foaming process using the polypropylene resin composition as a base resin, as defined in claim 1. The base resin may contain a resin other than the polypropylene resin in an amount of 10 mass% or less, 5 mass% or less, 3 mass% or less, or 1 mass% or less in addition to the polypropylene resin composition as long as the effects of the present invention are not inhibited. More specifically, in one or more embodiments of the present invention, the base resin may contain the polypropylene resin composition in an amount of 100 mass%, or may contain the polypropylene resin composition in an amount of 90 mass% or more and 100 mass% or less and another resin in an amount of 0 mass% or more and 10 mass% or less, or may contain the polypropylene resin composition in an amount of 95 mass% or more and 100 mass% or less and another resin in an amount of 0 mass% or more and 5 mass% or less, or may contain the polypropylene resin composition in an amount of 97 mass% or more and 100 mass% or less and another resin in an amount of 0 mass% or more and 3 mass% or less, or may contain the polypropylene resin composition in an amount of 99 mass% or more and 100 mass% or less and another resin in an amount of 0 mass% or more and 1 mass% or less. Examples of the other resin include: polyethylene resins such as high-density polyethylene, intermediate-density polyethylene, low-density polyethylene, linear low-density polyethylene, linear very-low-density polyethylene, ethylene-vinyl acetate copolymers, ethylene-acrylic acid copolymers, and ethylene-methacrylic acid copolymers; styrene resins such as polystyrene, and styrene-maleic anhydride copolymers; and polyamides.

In one or more embodiments of the present invention, the polypropylene-resin pre-expanded particles are obtained by melt-kneading the polypropylene-resin composition including the base resin, a foaming agent, and optionally an additive, extruding the melted composition, and granulating the extruded melted composition. It is preferable that the melt-kneading process includes two steps, and the temperature at the second step is lower than the temperature at the first step. Specifically, the polypropylene-resin pre-expanded particles can be manufactured through what is known as an extrusion foaming process as follows. That is, after the base resin, a foaming agent, and optionally an additive have been fed into a first-stage extruder and melt-kneaded, the melted composition is fed into a second-stage extruder in which the temperature is set to be lower than that in the first-stage extruder, and is cooled, the melted composition (the molten resin containing the foaming agent) is then extruded through a die attached to the leading end of the second-stage extruder, and the extruded melted composition is granulated. The open cell ratio of the expanded particles is likely to be reduced due to the temperature in the second-stage extruder being lower than the temperature in the first-stage extruder, and thus the moldability is improved. The second-stage extruder is mainly used to cool the melted composition, and therefore, an equipment other than an extruder may also be used as long as this purpose can be achieved. For example, a static mixer or a melt cooler can be used instead.

In one or more embodiments of the present invention, the difference between the temperature at the first step and the temperature at the second step is preferably 5°C or more, more preferably 8°C or more, and even more preferably 10°C or more, from the viewpoint of reducing the open cell ratio of the expanded particles and improving the moldability.

In general, granulation method used to obtain expanded particles in an extrusion foaming process are roughly classified into cold cutting techniques and die face cutting techniques. An example of the cold cutting techniques is a technique (strand cutting technique) in which a molten resin containing a foaming agent that has been extruded through a small diameter die is foamed, and a strand-shaped in-molded article is drawn while being cooled by, for example, being passed through a water tank and is then cut. The die face cutting techniques are techniques in which a molten resin that has been extruded through a small diameter die is cut using a cutter that is rotated in contact with the die surface or with a slight interval being kept between the cutter and the die surface. The die face cutting techniques are classified into an underwater cutting technique, a watering cutting technique, and a hot cutting technique according to cooling techniques.

In one or more embodiments of the present invention, both a physical foaming agent and a degradable foaming agent can be favorably used as the foaming agent. Specific examples of the physical foaming agent include: aliphatic hydrocarbons such as propane, normal butane, isobutane, normal pentane, isopentane, and hexane; alicyclic hydrocarbons such as cyclopentane and cyclobutane; inorganic gases such as air, nitrogen, and carbonic acid gas; and water. Specific examples of the degradable foaming agent include: inorganic carbonates such as sodium bicarbonate and ammonium carbonate; organic acids such as citric acid or salts thereof (e.g., sodium citrate); azo compounds such as 2,2'-azobisisobutyronitrile and azodicarbonamide; sulfonyl hydrazide compounds such as benzensulfonyl hydrazide; nitroso compounds such as N,N-dinitrosopentamethylenetetramin (DNPT); and azide compounds such as terephthalazide. These foaming agents may be used alone or in combination of two or more. In particular, an inorganic gas and/or water is preferable from the viewpoint of safety in handling and simplification of the required equipment specifications, and an inorganic gas, especially carbonic acid gas, is preferable from the viewpoint that an in-molded article having a high expansion ratio is likely to be obtained. It is sufficient that the addition amount of the foaming agent is adjusted as appropriate because it varies depending on the type of foaming agent and the target expansion ratio of the polypropylene-resin pre-expanded particles. The addition amount of the foaming agent is preferably 0.1 parts by mass or more and 20 parts by mass or less, and more preferably 0.3 parts by mass or more and 15 parts by mass or less, with respect to 100 parts by mass of the base resin.

In one or more embodiments of the present invention, an additive may also be contained, and examples thereof include: a cell nucleating agent (also referred to as a "bubble nucleation agent"); a coloring agent; an antistatic agent; a flame retardant; stabilizers such as an antioxidant, a metal deactivator, a phosphorus-based processing stabilizer, an ultraviolet absorber, an ultraviolet stabilizer, a fluorescent brightening agent, metallic soap, and an antacid adsorption agent; a cross-linking agent; a chain transfer agent; a lubricant; a plasticizer; a filler; and a reinforcing agent. A masterbatch resin containing such an additive at a high concentration may be produced in advance by adding the additive to a resin, and be added to a polypropylene-resin mixture. The resin used in such a masterbatch resin is preferably a polyolefin resin, and more preferably a polypropylene resin. It is more preferable to produce a masterbatch resin using the same polypropylene resin as the polypropylene resin used as the base resin for expanded particles.

A bubble nucleation agent may be added as the additive for the purpose of controlling the cell shape. Examples of the bubble nucleation agent include sodium hydrogen carbonate, a mixture of sodium hydrogen carbonate and citric acid, monosodium citrate, talc, and calcium carbonate. These bubble nucleation agents may be used alone or in combination of two or more. In general, the addition amount of the bubble nucleation agent is preferably 0.01 parts by mass or more and 5 parts by mass or less with respect to 100 parts by mass of the base resin, but is not particularly limited thereto.

The throughput of the second-stage extruder, a static mixer or melt cooler, is not particularly limited, and may be, for example, 1 kg/hour or more and 1000 kg/hour or less. The throughput of may be 1 kg/hour or more and 50 kg/hour or less for a lab-type extruder, and the throughput of is preferably 20 kg/hour or more and 1000 kg/hour or less for a practical use-type extruder.

Although there is no limitation on the shape of a die used in the second-stage extruder, a static mixer or melt cooler, the opening of the die preferably has a circular shape from the viewpoint of easily obtaining expanded particles having the uniform external appearance and the uniform shape, and the diameter of the opening is preferably 0.1 mm or more and 2.0 mm or less and more preferably 0.3 mm or more and 1.0 mm or less.

In an embodiment of the present invention, the weight per expanded particle is preferably 0.2 mg or more and 10 mg or less, and more preferably 0.5 mg or more and 6.0 mg or less. In an embodiment of the present invention, the weight per expanded particle is the average weight of resin particles calculated based on the weight of randomly selected 100 particles out of the polypropylene-resin pre-expanded particles. When the weight per polypropylene-resin pre-expanded particle is 0.2 mg or more, the dimension change rate of an in-molded article tends not to be high, and when the weight per polypropylene-resin pre-expanded particle is 10 mg or less, the polypropylene-resin pre-expanded particles tend to be easily filled into a mold.

In one or more embodiments of the present invention, the bulk density of the polypropylene-resin pre-expanded particles is not particularly limited, but is preferably 20 g/L or more and 450 g/L or less, and more preferably 30 g/L or more and 300 g/L or less. When the bulk density of the expanded particles is within the above-described range, an in-molded article having a low open cell ratio and excellent compression strength can be easily obtained. In one or more embodiments of the present invention, the bulk density of the polypropylene-resin pre-expanded particles can be measured using a method described in Examples.

In one or more embodiments of the present invention, an in-molded article is manufactured by molding the polypropylene-resin pre-expanded particles through steam molding. For example, the following methods can be used to mold the polypropylene-resin pre-expanded particles into a polypropylene-resin in-molded article: (a) a method in which a predetermined internal pressure is applied to expanded particles by pressurizing the particles with an inorganic gas and thus impregnating the particles with the inorganic gas, and then the expanded particles are filled into a mold and thermally fused using steam (e.g., JP S51-22951A); (b) a method in which expanded particles are compressed with gas pressure, are filled into a mold, and then are thermally fused using steam while utilizing the resilience of the particles (e.g., JP S53-33996A); and (c) a method in which expanded particles are filled into a mold with a gap in the mold being widened, and then the filled expanded particles are compressed by closing the mold until the gap has a predetermined size and thermally fused using steam. Specifically, a polypropylene-resin in-molded article can be obtained by charging the polypropylene-resin pre-expanded particles into a mold that can be closed but cannot be hermetically sealed, and heating the particles using steam to perform steam-molding.

The steam pressure during in-molding is preferably 0.40 MPa or less, more preferably 0.38 MPa or less, and even more preferably 0.36 MPa or less, from the viewpoint of using a general-purpose molding machine to improve the moldability and reduce the cost.

In one or more embodiments of the present invention, the polypropylene-resin in-molded article preferably has a higher 50% compression strength from the viewpoint of achieving excellent static compression strength. The 50% compression strength varies depending on the density of an in-molded article. For example, the 50% compression strength of an in-molded article having a density within a range of 60 to 90 g/L is preferably 0.40 MPa or more, more preferably 0.50 MPa or more, and even more preferably 0.60 MPa or more. In one or more embodiments of the present invention, the 50% compression strength of the polypropylene-resin in-molded article can be measured using a method described in Examples.

In one or more embodiments of the present invention, it is sufficient that the density of the polypropylene-resin in-molded article is determined as appropriate in accordance with the application. The density thereof is not particularly limited, but is preferably 30 g/L or more and 300 g/L or less, and more preferably 40 g/L or more and 300 g/L or less. In one or more embodiments of the present invention, the density of the polypropylene-resin in-molded article can be measured using a method described in Examples.

One or more embodiments of the polypropylene resin composition used in the present invention may be configured as follows:
The polypropylene resin composition satisfies requirements (1) to (4) below:
(1) a melt tension at 230°C is 2.94 cN or more and 19.6 cN or less;
(2) a melting point Tm measured through differential scanning calorimetry is higher than 150°C and lower than 159°C;
(3) a cold crystallization temperature Tc measured through differential scanning calorimetry is 122°C or higher and lower than 130 °C; and
(4) an amount of melting heat ΔH measured through differential scanning calorimetry is 85 J/g or more and less than 100 J/g.

In an embodiment of the resin composition of the preceding embodiment, a mm-fraction of the propylene triad of the polypropylene resin composition measured through ¹³C-NMR is less than 96%.

In an embodiment of the resin composition of the preceding embodiments, a melt flow rate of the polypropylene resin composition is 1 g/10 minutes or more and 20 g/minute or less.

In an embodiment of the resin composition of the preceding embodiments,
the polypropylene resin composition contains a polypropylene resin having a branched structure in which a main chain is constituted by a polypropylene resin and side chains include constitutional units derived from one or more monomers selected from the group consisting of conjugated diene compounds and aromatic vinyl compounds.

In an embodiment of the resin composition of the preceding embodiment, the monomer is one or more selected from the group consisting of isoprene, butadiene, and styrene.

In an embodiment of the resin composition of the preceding embodiments, the composition contains alcohol derived from a radical polymerization initiator.

In an embodiment of the resin composition of the preceding embodiment, the alcohol derived from a radical polymerization initiator is one or more selected from the group consisting of t-butyl alcohol and isopropanol.

A method for producing the polypropylene resin composition according to the preceding embodiments includes a step of melt-kneading a polypropylene resin, one or more monomers selected from the group consisting of conjugated diene compounds and aromatic vinyl compounds, and a radical polymerization initiator at a temperature at which the polypropylene resin melts and the radical polymerization initiator decomposes, and extruding the melted composition.

In an embodiment of the method according to the preceding embodiment,
the polypropylene resin is a propylene homopolymer.

In an embodiment of the method according to the preceding embodiments,
a melt flow rate of the polypropylene resin is 1 g/10 minutes or more and 20 g/ minute or less.

In an embodiment of the method according to the preceding embodiments,
the radical polymerization initiator is one or more selected from the group consisting of peroxydicarbonate and peroxyester.

In an embodiment of the method according to the preceding embodiments,
an amount of the monomer used for 1 kg of the polypropylene resin is 0.04 mol or more and 0.14 mol or less.

### Examples

Hereinafter, one or more embodiments of the present invention will be described in detail based on examples. Note that the present invention is not limited to these examples.

The following are descriptions of evaluation methods and measurement methods performed in examples and comparative examples.

### Melt Tension

Capilograph (manufactured by Toyo Seiki Seisaku-sho, Ltd.) that was equipped with an attachment for a melt tension measurement and that had a cylinder having a diameter of 10 mm provided with an orifice having a diameter of 1 mm and a length of 10 mm at the leading end thereof was used. A sample was filled into the cylinder whose temperature was set to 230°C, and was preheated for 5 minutes. Then, a strand discharged from the orifice by lowering a piston at a rate of 10 mm/minute was wound around a pulley with a load cell located 350 mm below the orifice and drawn at a rate of 1 m/minute. After stabilization, the drawing speed was increased at such a rate that it reached to a rate of 200 m/minute in 4 minutes. A load (unit: cN) applied to the pulley with the load cell at the time of breakage of the strand was taken as the melt tension.

### Melting Point Tm, Cold Crystallization Temperature Tc, and Amount of melting heat ΔH

5 to 6 mg of a sample was heated from 40°C to 220°C at a rate of 10°C/minute and melted using a differential scanning calorimeter DSC (Type DSC6200, manufactured by Seiko Instruments Inc.). Then, the sample was cooled from 220°C to 40°C at a rate of 10°C/minute and crystallized. Furthermore, the sample was heated from 40°C to 220°C at a rate of 10°C/minute and melted. Thus, DSC curves for the first heating-up step, the cooling-down step, and the second heating-up step were obtained.

### Melting Point Tm

The melting-peak temperature in the DSC curve for the second heating-up step was taken as the melting point Tm. Note that, if a plurality of melting peaks were observed in the DSC curve, a melting peak at the highest temperature was employed.

### Cold Crystallization Temperature Tc

The crystallization-peak temperature in the DSC curve for the cooling-down step was taken as the cold crystallization temperature Tc. Note that, if a plurality of crystallization peaks were observed in the DSC curve, a crystallization peak at the highest temperature was employed.

### Amount of melting heat ΔH

In the DSC curve for the second heating-up step, a line segment joining the point corresponding to 100°C and the melting end point on the DSC curve was drawn, and the amount of melting heat corresponding to the area surrounded by the line segment and the DSC curve was calculated. A value obtained by dividing this amount of melting heat by the mass of the sample was taken as the amount of melting heat ΔH.

### mm-Fraction

70 to 80 mg of a sample was dissolved in 0.5 mL of O-dichlorobenzene-d4, and was subjected to ¹³C-NMR measurement performed at 150°C using an NMR measurement equipment (Type VNMRS 600, manufactured by VARIAN). Thus, an NMR chart was obtained. The detailed measurement conditions were as follows.
Flip angle: 90 degrees
Pulse interval: 10 seconds
Resonant frequency: 150 MHz
Accumulation number: 1024

In the obtained NMR chart, the ratio (%) of the accumulated area of peaks derived from the mm conformation in the range of 21.6 to 23.0 ppm to the accumulated area of peaks in the range of 19.5 to 23.0 ppm was calculated, and the obtained value was taken as the mm-fraction.

### Melt Flow Rate (MFR)

The melt flow rate (MFR) was determined in conformity with the prescriptions of the B method described in ISO 1133 (1997). Specifically, a distance traveled by a piston for a certain period of time under a constant load of 2.16 kg at 230°C was measured using Melt Indexer S-01 (manufactured by Toyo Seiki Seisaku-sho, Ltd.), and a value converted into a mass of the resin squeezed out from an orifice for 10 minutes using the obtained distance and the density of the resin at the measurement temperature was taken as the MFR.

Note that the above-mentioned certain period of time was as follows: 120 seconds when the melt flow rate was greater than 0.5 g/10 minutes and smaller than or equal to 1.0 g/10 minutes; 60 seconds when the melt flow rate was greater than 1.0 g/10 minutes and smaller than or equal to 3.5 g/10 minutes; 30 seconds when the melt flow rate was greater than 3.5 g/10 minutes and smaller than or equal to 10 g/10 minutes; 10 seconds when the melt flow rate was greater than 10 g/10 minutes and smaller than or equal to 25 g/10 minutes; 5 seconds when the melt flow rate was greater than 25 g/10 minutes and smaller than or equal to 100 g/10 minutes; and 3 seconds when the melt flow rate was greater than 100 g/10 minutes.

### Bulk Density

The polypropylene-resin pre-expanded particles were collected using a 1-L measuring cup (mass: WO), and were then leveled off and weighed (mass: W1). The mass of the expanded particles Wb (g) was calculated from the difference in the mass of the measuring cup between before and after the collection of the expanded particles (W1-WO), and the bulk density was determined in accordance with the following formula using the mass Wb and the exact inner volume Vk (L) of the measuring cup that had been measured in advance. $Bulk density \left(g/L\right) = Wb / Vk$

### Open Cell Ratio

The volume of the polypropylene-resin pre-expanded particles determined in accordance with the method described in PROCEDURE C of ASTM D2856-87 was defined as Vc (cm³), and the open cell ratio (%) was determined in accordance with the following formula. $Open cell ratio \left(%\right) = \left(\left(Va-Vc\right)\times 100\right) / Va$

Note that Vc was measured using an air comparison type specific gravimeter Model 1000 manufactured by Tokyo-Science Co., Ltd. The volume Va (cm³) was an apparent volume of the polypropylene-resin pre-expanded particles determined by submerging all the polypropylene-resin pre-expanded particles in ethanol contained in a measuring cylinder after Vc thereof had been measured using the air comparison type specific gravimeter, and measuring the rise distance of the liquid surface in the measuring cylinder (submergence method).

### Fusion Rate

The fusion rate of the polypropylene-resin in-molded article was evaluated by forming a crack with a depth of about 5 mm on the surface of the in-molded article using a knife, splitting the in-molded article along the crack, observing the fracture surface, and determining the ratio of the number of broken particles to the total number of particles on the fracture surface. The fusion rate that was greater than or equal to 80% was acceptable.

### Deformation and Shrinkage

A metal ruler was brought into contact with the surface having the largest area in the polypropylene-resin in-molded article such that the ruler passed through the center of that surface and extended in parallel with the longest side, and the largest dimension of gaps between the ruler and the molded article was measured. The obtained value was taken as the deformation and shrinkage amount. The deformation and shrinkage amount that was smaller than or equal to 1.5 mm was acceptable.

### Evaluation of Appearance

It was evaluated whether or not gaps were formed between the expanded particles at the central portion of the surface having the largest area in the polypropylene-resin in-molded article. The in-molded article in which the number of gaps between the expanded particles was small and whose surface was beautiful was acceptable.

### Density

The mass W (g) of the polypropylene-resin in-molded article was measured, and the length, width, and thickness thereof were measured using a vernier caliper to calculate the volume V (cm³). The density (g/L) of the molded article was determined in accordance with the following formula. $Density of molded article \left(g/L\right) = W \left(g\right) / V \left({cm}^{3}\right) \times 1000$

### 50% Compression Strength

A test piece with a length of 50 mm, a width of 50mm, and a thickness of 25 mm was cut out from the polypropylene-resin in-molded article and was compressed at a rate of 10 mm/minute in conformity with NDZ-Z0504, and the compression stress (MPa) at the 50% compression level was measured.

The following polypropylene resins were used as raw material resins in examples and comparative examples. Table 1 below collectively show the melting points Tm, the cold crystallization temperatures Tc, the amount of melting heats ΔH, the MFRs, and the mm-fractions of the polypropylene resins.
(1) PP-1: propylene homopolymer ("F113G" manufactured by Prime Polymer Co., Ltd.)
(2) PP-2: propylene homopolymer ("J106G" manufactured by Prime Polymer Co., Ltd.)
(3) PP-3: random copolymer of propylene and ethylene ("F724NPC" manufactured by Prime Polymer Co., Ltd.), propylene 98 mass%
(4) PP-4: propylene homopolymer ("J10SM" manufactured by Prime Polymer Co., Ltd.)

**Table 1**

| | Melting point Tm (°C) | Cold Crystallization Temperature Tc (°C) | Amount of melting heat ΔH (J/g) | MFR (g/10 min) | mm-Fraction (%) |
|---|---|---|---|---|---|
| PP-1 | 165.0 | 118.8 | 101.5 | 3 | 96 |
| PP-2 | 164.2 | 117.1 | 108.0 | 15 | 97 |
| PP-3 | 149.3 | 108.4 | 88.4 | 7 | 93 |
| PP-4 | 165.8 | 127.1 | 103.4 | 45 | 98 |

### Example 1

### Manufacture of Polypropylene Resin Composition

A mixture of 100 parts by mass of PP-1 serving as a raw material polypropylene resin and 1.4 parts by mass of t-butyl peroxyisopropylmonocarbonate ("PERBUTYL (registered trademark) I, 1-minute half-life temperature: 158.8°C", manufactured by NOF Corporation) serving as a radical polymerization initiator was supplied from a hopper to a 45-mmφ twin-screw extruder (L/D=40) at a rate of 70 kg/hour, and was melt-kneaded at a cylinder temperature of 200°C at a rotational frequency of 150 rpm. 0.6 parts by mass of a conjugated diene compound isoprene was supplied as a monomer from an injection unit provided at an intermediate portion of the extruder using a metering pump and melt-kneaded with the mixture in the twin-screw extruder. Then, extruded strands were cooled using water and cut to produce pellets of a polypropylene resin composition.

The obtained polypropylene resin composition contained a polypropylene resin having a branched structure in which the main chain was constituted by a polypropylene resin and the side chains included constitutional units derived from the conjugated diene compound. Also, the obtained polypropylene resin composition contained alcohol derived from the radical polymerization initiator, specifically t-butyl alcohol and isopropanol.

### Manufacture of Polypropylene-Resin Pre-expanded particles

A mixture of 100 parts by mass of the polypropylene resin composition obtained as described above and 0.2 parts by mass of talc ("PK-S" manufactured by Hayashi-Kasei) was supplied from a hopper to a 15-mmφ twin-screw extruder (L/D=30) at a rate of 1.0 kg/hour, and was melt-kneaded at a cylinder temperature of 200°C at a rotational frequency of 100 rpm. Carbonic acid gas serving as a foaming agent was supplied from an injection unit provided at an intermediate portion of the extruder using a metering pump such that the ratio of the carbonic acid gas to 100 parts by mass of the polypropylene resin composition was 1.7 parts by mass. Then, the mixture was further melt-kneaded.

Next, the melted composition was passed through a melt cooler that was connected to the leading end of the twin-screw extruder and in which the temperature was set to 164°C, and was thus cooled. Then, the product was extruded, under atmospheric pressure, from a die that was attached to the leading end of the melt cooler and was provided with two pores having a diameter of 0.7 mm, and was thus foamed. The extruded melted composition was cut using a rotary cutter attached to the leading end of the die to produce polypropylene-resin pre-expanded particles that had a mass per particle of 1.5 to 2.0 mg/particle.

### Manufacture of Polypropylene-Resin In-Molded Article

The polypropylene-resin pre-expanded particles obtained as described above were filled into a block-shaped mold (with a length of 400 mm, a width of 300 mm, and a variable thickness) with the thickness of the mold being set to 52 mm (crash gape rate: 30%), and was then compressed using a molding machine (KD345) manufactured by Daisen Co., Ltd., such that the thickness of the mold was 40 mm. Next, air inside the mold was discharged using 0.1-MPa steam (gage pressure), and then in-molding was performed for 10 seconds using steam with a steam pressure of 0.40 MPa (gage pressure), which is the maximum possible steam pressure, to produce a polypropylene-resin in-molded article.

Subsequently, in-molding was repeated in the same manner, except that the steam pressure of steam used in in-molding was sequentially lowered by 0.02 MPa. Thus, in-molded articles corresponding to the respective steam pressures were obtained.

The obtained in-molded articles were cured in a drying room at 75°C for 24 hours, and were then left to stand at room temperature for 4 hours. Thereafter, the fusion rate, deformation, shrinkage, and appearance of each of the in-molded articles were evaluated in accordance with the above-mentioned evaluation methods. The lowest steam pressure at which an in-molded article that is acceptable regarding these items was obtained was defined as the lowest moldable steam pressure.

### Examples 2 to 6

### Manufacture of Polypropylene Resin Compositions

Polypropylene resin compositions were manufactured in the same manner as in Example 1, except that polypropylene resins shown in Table 2 below were used as raw material polypropylene resins, and the monomers shown in Table 2 below and t-butyl peroxyisopropylmonocarbonate serving as a radical polymerization initiator were used in the respective proportions shown in Table 2 below.

The obtained polypropylene resin compositions each contained a polypropylene resin having a branched structure in which the main chain was constituted by a polypropylene resin and the side chains included constitutional units derived from the conjugated diene compound. Also, the obtained polypropylene resin compositions each contained alcohol derived from the radical polymerization initiator, specifically t-butyl alcohol and isopropanol.

### Manufacture of Polypropylene-Resin Pre-expanded particles

Polypropylene-resin pre-expanded particles were manufactured in the same manner as in Example 1, except that the polypropylene resin compositions obtained as described above were used.

### Manufacture of Polypropylene-Resin In-molded Articles

Polypropylene-resin in-molded articles were manufactured in the same manner as in Example 1, except that the polypropylene-resin pre-expanded particles obtained as described above were used.

### Comparative Examples 1 to 9

### Manufacture of Polypropylene Resin Compositions

Polypropylene resin compositions were manufactured in the same manner as in Example 1, except that polypropylene resins shown in Table 3 below were used as raw material polypropylene resins, and the monomers shown in Table 3 below and t-butyl peroxyisopropylmonocarbonate serving as a radical polymerization initiator were used in the respective proportions shown in Table 3 below.

### Manufacture of Polypropylene-Resin Pre-expanded particles

Polypropylene-resin pre-expanded particles were manufactured in the same manner as in Example 1, except that the polypropylene resin compositions obtained as described above were used.

### Manufacture of Polypropylene-Resin In-molded Articles

Polypropylene-resin in-molded articles were manufactured in the same manner as in Example 1, except that the polypropylene-resin pre-expanded particles obtained as described above were used.

As to Comparative Examples 1 to 9, the pre-expanded particles of Comparative Example 4 insufficiently expanded at any steam pressure, and evaluable molded articles could not be obtained. In Comparative Example 5, although evaluable molded articles were obtained, the pre-expanded particles insufficiently expanded, and thus the molding space was not filled with the obtained molded article. As a result, higher steam pressure was required. In Comparative Examples 6 to 8, the obtained pre-expanded particles significantly shrank just after discharged from the die, and hardly expanded. Accordingly, molding using these pre-expanded particles was not worth evaluating.

### Reference Example 1

### Manufacture of Polypropylene-Resin Pre-expanded particles

Polypropylene-resin pre-expanded particles were manufactured in the same manner as in Example 1, except that a propylene homopolymer having a branched structure with characteristics shown in Table 3 below ("WAYMAX MFX6" manufactured by Japan Polypropylene Corporation) was used instead of a polypropylene resin composition.

### Manufacture of Polypropylene-Resin In-molded Article

A polypropylene-resin in-molded article was manufactured in the same manner as in Example 1, except that the polypropylene-resin pre-expanded particles obtained as described above were used. The pre-expanded particles insufficiently expanded at any steam pressure, and evaluable molded articles could not be obtained.

The polypropylene-resin pre-expanded particles and the polypropylene-resin in-molded articles obtained in the examples, comparative examples, and reference example were evaluated in accordance with the above-described evaluation methods. Tables 2 and 3 below show the evaluation results.

**Table 2**

| | | | | Ex. 1 | Ex. 2 | Ex. 3 | Ex. 4 | Ex. 5 | Ex. 6 |
|---|---|---|---|---|---|---|---|---|---|
| Polypropylene resin composition | (a) Polypropylene resin | PP-1 | parts by mass | 100 | 100 | 100 | 100 | - | 100 |
| | | PP-2 | parts by mass | - | - | - | - | 100 | - |
| | (b) Monomer | Isoprene | parts by mass | 0.6 | 0.5 | 0.6 | 0.45 | 0.6 | - |
| | | | molar amount* | 0.09 | 0.075 | 0.09 | 0.068 | 0.09 | - |
| | | Styrene | parts by mass | - | - | - | - | - | 1.1 |
| | | | molar amount* | - | - | - | - | - | 0.11 |
| | (c) Radical polymerization initiator | | parts by mass | 1.4 | 1.0 | 2.0 | 0.7 | 1.4 | 1.0 |
| | Melt tension (cN) | | | 4.4 | 6.0 | 3.4 | 7.9 | 3.8 | 5.4 |
| | Melting point Tm (°C) | | | 155.5 | 157.2 | 153.8 | 158.9 | 157.1 | 158.5 |
| | Cold crystallization temperature Tc (°C) | | | 125.4 | 126.3 | 123.5 | 127.9 | 124.3 | 125.5 |
| | Amount of melting heat ΔH (J/g) | | | 96.5 | 97.4 | 93.1 | 99.7 | 98.1 | 95.7 |
| | MFR (g/10 min) | | | 2.6 | 3.2 | 5.3 | 2.4 | 10.1 | 7.3 |
| | mm-Fraction (%) | | | 93 | 94 | 92 | 94 | 94 | 94 |
| Polypropylene-resin pre-expanded particle | Bulk density (g/L) | | | 60 | 66 | 62 | 71 | 61 | 63 |
| | Open cell ratio (%) | | | 5.3 | 6.4 | 3.3 | 10.2 | 7.7 | 6.6 |
| Polypropylene-resin in-molded article | Lowest moldable steam pressure (Mpa) | | | 0.32 | 0.32 | 0.30 | 0.34 | 0.32 | 0.34 |
| | Density of molded article (g/L) | | | 76 | 75 | 71 | 82 | 79 | 76 |
| | 50% Compression strength (Mpa) | | | 0.67 | 0.69 | 0.65 | 0.68 | 0.65 | 0.63 |

| | | | | | | | | | |
|---|---|---|---|---|---|---|---|---|---|
| "Molar amount*" means a molar amount (mol) with respect to 1 kg of the polypropylene resin. | | | | | | | | | |

**Table 3**

| | | | | Comp. Ex. 1 | Comp. Ex. 2 | Comp. Ex. 3 | Comp. Ex. 4 | **Comp.** Ex. 5 | Comp. Ex. 6 | Comp. Ex. 7 | Comp. Ex. 8 | Comp. Ex. 9 | Ref. Ex. 1 |
|---|---|---|---|---|---|---|---|---|---|---|---|---|---|
| Polypropylene resin composition | (a) Polypropylene resin | PP-1 | parts by mass | - | 100 | 100 | 100 | 100 | - | - | - | - | |
| | | PP-3 | parts by mass | 100 | - | - | - | - | - | - | - | - | |
| | | PP-4 | parts by mass | - | - | - | - | - | 100 | 100 | 100 | 100 | |
| | (b) Monomer | Isoprene | parts by mass | 0.55 | 2.0 | 1.0 | 0.3 | 0.5 | 0.4 | 0.25 | 0.5 | 0.9 | |
| | | | molar amount* | 0.083 | 0.3 | 0.15 | 0.045 | 0.075 | 0.06 | 0.038 | 0.075 | 0.14 | |
| | (c) Radical polymerization initiator | | parts by mass | 1.4 | 3.5 | 1.4 | 0.05 | 0.3 | 1.4 | 1.4 | 0.3 | 0.5 | |
| | Melt tension (cN) | | | 5.1 | 4.1 | 6.6 | 2.5 | 6.4 | 1.1 | 0.9 | 1.8 | 2.5 | 12.7 |
| | Melting point Tm (°C) | | | 147.7 | 148.2 | 154.8 | 161.2 | 160.7 | 157.5 | 156.8 | 163.4 | 162.6 | 155.2 |
| | Cold crystallization temperature Tc (°C) | | | 115.4 | 119.1 | 124.4 | 130.5 | 129.1 | 122.4 | 123.5 | 126.8 | 126.5 | 119.9 |
| | Amount of melting heat ΔH (J/g) | | | 73.4 | 83.2 | 82.4 | 101.0 | 100.4 | 90.7 | 93.0 | 103.5 | 90.2 | 99.2 |
| | MFR (g/10 min) | | | 3.3 | 4.2 | 0.5 | 2.4 | 1.8 | 165 | 220 | 35 | 8 | 3 |
| | mm-Fraction (%) | | | 91 | 90 | 92 | 96 | 96 | 95 | 95 | 97 | 97 | 97 |
| Polypropylene -resin pre-expanded particle | Bulk density (g/L) | | | 64 | 62 | 64 | 47 | 60 | No evaluable samples obtained | | | | 49 |
| | Open cell ratio (%) | | | 3.7 | 4.4 | 5.5 | 66 | 12.1 | | | | | 62 |
| Polypropylene -resin in-molded article | Lowest moldable steam pressure (Mpa) | | | 0.24 | 0.26 | 0.32 | Not moldable | >0.40 | | | | | Not molda ble |
| | Density of molded article (g/L) | | | 68 | 66 | 73 | | 75 | | | | | |
| | 50% Compression strength (Mpa) | | | 0.35 | 0.39 | 0.37 | | 0.66 | | | | | |

| | | | | | | | | | | | | | |
|---|---|---|---|---|---|---|---|---|---|---|---|---|---|
| "Molar amount*" means a molar amount (mol) with respect to 1 kg of the polypropylene resin. | | | | | | | | | | | | | |

As is clear from the data shown in Table 2, in each of Examples 1 to 6, polypropylene-resin pre-expanded particles were manufactured through extrusion foaming process using the polypropylene resin composition having a melt tension at 230°C of 2.94 cN or more and 19.6 cN or less, a melting point Tm higher than 150°C and lower than 159°C, a cold crystallization temperature Tc of 122°C or higher and lower than 130°C, and an amount of melting heat ΔH of 85 J/g or more and less than 100 J/g as a base material, and therefore, both of the following goals could be achieved at a high level: the polypropylene-resin pre-expanded particles had a high closed cell ratio, exhibited favorable moldability, and could be molded at low steam pressure, which was required for in-mold molding; and a polypropylene-resin in-molded article having high strength could be obtained.

On the other hand, as is clear from the data shown in Table 3, in Comparative Examples 1 and 2 in which polypropylene-resin pre-expanded particles were manufactured through extrusion foaming process using the polypropylene resin composition having a melting point Tm of 150°C or lower, a cold crystallization temperature Tc lower than 122°C, and an amount of melting heat ΔH less than 85 J/g as a base material, the obtained polypropylene-resin in-molded article had poor strength. Also, in Comparative Example 3 in which polypropylene-resin pre-expanded particles were manufactured through extrusion foaming process using the polypropylene resin composition having an amount of melting heat ΔH less than 85 J/g as a base material, the obtained polypropylene-resin in-molded article had poor strength. In the case of Comparative Example 4, the polypropylene-resin pre-expanded particles manufactured through extrusion foaming process using the polypropylene resin composition having a melt tension at 230°C less than 2.94 cN, a melting point Tm of 159°C or higher, a cold crystallization temperature Tc of 130°C or higher, and an amount of melting heat ΔH of 100 J/g or more as a base material had a significantly high open cell ratio, and a polypropylene-resin in-molded article could not be molded. In the case of Comparative Example 5, the polypropylene-resin pre-expanded particles manufactured through extrusion foaming process using the polypropylene resin composition having a melting point Tm of 159°C or higher, and an amount of melting heat ΔH of 100 J/g or more as a base material had a high open cell ratio, and a polypropylene-resin in-molded article could not be molded at low steam pressure. In the case of Comparative Examples 6 to 8 in which the polypropylene resin composition having a melt tension at 230°C less than 2.94 cN was used as a base material, an attempt was made to manufacture polypropylene-resin pre-expanded particles through extrusion foaming process, but the obtained particles significantly shrank, and thus expanded particles could not be obtained. Also, in the case of Comparative Example 9 in which the polypropylene resin composition having a melt tension at 230°C less than 2.94 cN was used as a base material, the die pressure was insufficient. In the case of Reference Example 1, the polypropylene-resin pre-expanded particles manufactured through extrusion foaming process using the polypropylene resin having a cold crystallization temperature Tc lower than 122°C as a base material had a significantly high open cell ratio, and a polypropylene-resin in-molded article could not be molded.

## Claims

1. A method for producing polypropylene-resin pre-expanded particles, comprising a step of obtaining polypropylene-resin pre-expanded particles through extrusion foaming process comprising melt-kneading a polypropylene-resin composition including the base resin, a foaming agent, and optionally an additive, extruding the melted composition, and granulating the extruded melted composition,
wherein the polypropylene resin composition satisfies requirements (1) to (4) below:
(1) a melt tension at 230°C is 2.94 cN or more and 19.6 cN or less, wherein the melt tension is measured in accordance with the description;
(2) a melting point Tm measured through differential scanning calorimetry is higher than 150°C and lower than 159°C;
(3) a cold crystallization temperature Tc measured through differential scanning calorimetry is 122°C or higher and lower than 130°C; and
(4) an amount of melting heat ΔH measured through differential scanning calorimetry is 85 J/g or more and less than 100 J/g.

2. The method according to claim 1,
wherein a mm-fraction of the propylene triad of the polypropylene resin composition measured through ¹³C-NMR is less than 96 %.

3. The method according to claim 1 or 2,
wherein a melt flow rate of the polypropylene resin composition is 1 g/10 minutes or more and 20 g/10 minutes or less, wherein the melt flow rate is measured in accordance with the description.

4. The method according to any one of claims 1 to 3,
wherein the polypropylene resin composition comprises a polypropylene resin having a branched structure in which a main chain is constituted by a polypropylene resin and side chains include constitutional units derived from one or more monomers selected from the group consisting of conjugated diene compounds and aromatic vinyl compounds.

5. The method according to claim 4,
wherein the monomer is one or more selected from the group consisting of isoprene, butadiene, and styrene.

6. The method according to any one of claims 1 to 5,
wherein the polypropylene resin composition contains alcohol derived from a radical polymerization initiator.

7. The method according to claim 6,
wherein the alcohol derived from a radical polymerization initiator is one or more selected from the group consisting of t-butyl alcohol and isopropanol.

8. The method according to any one of claims 1 to 7,
wherein the polypropylene resin composition is produced by a method for producing a polypropylene resin composition comprising a step of melt-kneading a polypropylene resin, one or more monomers selected from the group consisting of conjugated diene compounds and aromatic vinyl compounds, and a radical polymerization initiator at a temperature at which the polypropylene resin melts and the radical polymerization initiator decomposes, and extruding the melt-kneaded mixture.

9. The method according to claim 8,
wherein the polypropylene resin is a propylene homopolymer.

10. The method according to claim 8 or 9,
wherein a melt flow rate of the polypropylene resin is 1 g/10 minutes or more and 20 g/10 minutes or less, wherein the melt flow rate is measured in accordance with the description.

11. The method according to any one of claims 8 to 10,
wherein the radical polymerization initiator is one or more selected from the group consisting of peroxydicarbonate and peroxyester.

12. The method according to any one of claims 8 to 11,
wherein an amount of the monomer used for 1 kg of the polypropylene resin is 0.04 mol or more and 0.14 mol or less.

13. The method according to any one of claims 1 to 12,
wherein the polypropylene-resin pre-expanded particles have an open cell ratio of 10.5% or less, wherein the open cell ratio is measured in accordance with the description.

14. A method for producing a polypropylene-resin in-molded article, comprising
a step of obtaining a polypropylene-resin in-molded article through steam molding the polypropylene-resin pre-expanded particles obtained using the method according to any one of claims 1 to 13.

15. The method according to claim 14,
wherein steam pressure used in the steam molding is 0.40 MPa or less.

## Patentansprüche

1. Ein Verfahren zur Herstellung von vorgeschäumten Polypropylenharzteilchen, umfassend einen Schritt des Erhaltens von vorgeschäumten Polypropylenharzteilchen durch ein Extrusionsschäumverfahren, welches das Schmelzkneten einer Polypropylenharzzusammensetzung enthaltend ein Basisharz, ein Schäummittel und gegebenenfalls einen Zusatzstoff, das Extrudieren der geschmolzenen Zusammensetzung und das Granulieren der extrudierten geschmolzenen Zusammensetzung umfasst,
wobei die Polypropylenharzzusammensetzung die folgenden Anforderungen (1) bis (4) erfüllt:
(1) eine Schmelzspannung bei 230°C beträgt 2,94 cN oder mehr und 19,6 cN oder weniger, wobei die Schmelzspannung gemäß der Beschreibung gemessen wird;
(2) ein mittels Differential-Scanning-Kalorimetrie gemessener Schmelzpunkt Tm beträgt mehr als 150°C und weniger als 159°C;
(3) eine mittels Differential-Scanning-Kalorimetrie gemessene Kaltkristallisationstemperatur Tc beträgt 122°C oder mehr und weniger als 130°C; und
(4) eine mittels Differential-Scanning-Kalorimetrie gemessene Menge an Schmelzwärme ΔH beträgt 85 J/g oder mehr und weniger als 100 J/g.

2. Das Verfahren gemäß Anspruch 1,
wobei ein durch ¹³C-NMR gemessener mm-Anteil der Propylen-Triade der Polypropylenzusammensetzung weniger als 96% beträgt.

3. Das Verfahren gemäß Anspruch 1 oder 2,
wobei eine Schmelzflussrate der Polypropylenharzzusammensetzung 1 g/10 Minuten oder mehr und 20 g/10 Minuten oder weniger beträgt, wobei die Schmelzflussrate gemäß der Beschreibung gemessen wird.

4. Das Verfahren gemäß einem der Ansprüche 1 bis 3,
wobei die Polypropylenharzzusammensetzung ein Polypropylenharz mit einer verzweigten Struktur umfasst, bei welcher eine Hauptkette aus einem Polypropylenharz gebildet ist und Seitenketten konstituierende Einheiten beinhalten, welche von einem oder mehreren Monomeren, ausgewählt aus der Gruppe bestehend aus konjugierten Dienverbindungen und aromatischen Vinylverbindungen, abgeleitet sind.

5. Das Verfahren gemäß Anspruch 4,
wobei es sich bei dem Monomer um eines oder mehrere, ausgewählt aus der Gruppe bestehend aus Isopren, Butadien und Styrol, handelt.

6. Das Verfahren gemäß einem der Ansprüche 1 bis 5,
wobei die Polypropylenharzzusammensetzung Alkohol enthält, welcher von einem Radikalpolymerisationsinitiator abgeleitet ist.

7. Das Verfahren gemäß Anspruch 6,
wobei es sich bei dem von einem Radikalpolymerisationsinitiator abgeleiteten Alkohol um einen oder mehrere, ausgewählt aus der Gruppe bestehend aus t-Butylalkohol und Isopropanol, handelt.

8. Das Verfahren gemäß einem der Ansprüche 1 bis 7,
wobei die Polypropylenharzzusammensetzung durch ein Verfahren zur Herstellung einer Polypropylenharzzusammensetzung hergestellt wird, welches einen Schritt des Schmelzknetens eines Polypropylenharzes, eines oder mehrerer Monomere, ausgewählt aus der Gruppe bestehend aus konjugierten Dienverbindungen und aromatischen Vinylverbindungen, sowie eines Radikalpolymerisationsinitiators bei einer Temperatur, bei welcher das Polypropylenharz schmilzt und sich der Radikalpolymerisationsinitiator zersetzt, und des Extrudierens des schmelzgekneteten Gemisches umfasst.

9. Das Verfahren gemäß Anspruch 8,
wobei das Polypropylenharz ein Propylen-Homopolymer ist.

10. Das Verfahren gemäß Anspruch 8 oder 9,
wobei eine Schmelzflussrate des Polypropylenharzes 1 g/10 Minuten oder mehr und 20 g/10 Minuten oder weniger beträgt, wobei die Schmelzflussrate gemäß der Beschreibung gemessen wird.

11. Das Verfahren gemäß einem der Ansprüche 8 bis 10,
wobei es sich bei dem Radikalpolymerisationsinitiator um einen oder mehrere, ausgewählt aus der Gruppe bestehend aus Peroxydicarbonat und Peroxyester, handelt.

12. Das Verfahren gemäß einem der Ansprüche 8 bis 11,
wobei eine Menge des für 1 kg des Polypropylenharzes verwendeten Monomers 0,04 mol oder mehr und 0,14 mol oder weniger beträgt.

13. Das Verfahren gemäß einem der Ansprüche 1 bis 12,
wobei die vorgeschäumten Polypropylenharzteilchen einen offenen Zellanteil von 10,5% oder weniger aufweisen, wobei der offene Zellanteil gemäß der Beschreibung gemessen wird.

14. Ein Verfahren zur Herstellung eines in Form hergestellten Gegenstands aus Polypropylenharz, umfassend
einen Schritt des Erhaltens eines in Form hergestellten Gegenstands aus Polypropylenharz durch Dampfformen der vorgeschäumten Polypropylenharzteilchen, welche unter Verwendung des Verfahrens gemäß einem der Ansprüche 1 bis 13 erhalten wurden.

15. Das Verfahren gemäß Anspruch 14,
wobei der beim Dampfformen verwendete Dampfdruck 0,40 MPa oder weniger beträgt.

## Revendications

1. Méthode pour produire des particules préexpansées de résine de polypropylène, comprenant une étape d'obtention de particules préexpansées de résine de polypropylène par un procédé de moussage par extrusion comprenant le malaxage à l'état fondu d'une composition de résine de polypropylène incluant la résine de base, un agent moussant, et éventuellement un additif, l'extrusion de la composition fondue, et la granulation de la composition fondue extrudée,
dans laquelle la composition de résine de polypropylène satisfait aux exigences (1) à (4) ci-dessous :
(1) la tension à l'état fondu à 230 °C est de 2,94 cN ou plus et 19,6 cN ou moins, laquelle tension à l'état fondu est mesurée conformément à la description ;
(2) le point de fusion Tm, mesuré par analyse calorimétrique différentielle, est supérieur à 150 °C et inférieur à 159 °C ;
(3) la température de cristallisation au froid Tc, mesurée par analyse calorimétrique différentielle, est de 122 °C ou plus et inférieure à 130 °C ; et
(4) la quantité de chaleur de fusion ΔH, mesurée par analyse calorimétrique différentielle, est de 85 J/g ou plus et inférieure à 100 J/g.

2. Méthode selon la revendication 1, dans laquelle une fraction mm de la triade de propylène de la composition de résine de polypropylène, mesurée par RMN-¹³C, est inférieure à 96 %.

3. Méthode selon la revendication 1 ou 2, dans laquelle un indice de fluage de la composition de résine de polypropylène est de 1 g/10 minutes ou plus et 20 g/10 minutes ou moins, dans laquelle l'indice de fluage est mesuré conformément à la description.

4. Méthode selon l'une quelconque des revendications 1 à 3, dans laquelle la composition de résine de polypropylène comprend une résine de polypropylène ayant une structure ramifiée dans laquelle une chaîne principale est constituée d'une résine de polypropylène et des chaînes latérales incluent des motifs constitutifs dérivés d'un ou plusieurs monomères choisis dans le groupe constitué par les composés diènes conjugués et les composés vinylaromatiques.

5. Méthode selon la revendication 4, dans laquelle le monomère est un ou plusieurs choisis dans le groupe constitué par l'isoprène, le butadiène et le styrène.

6. Méthode selon l'une quelconque des revendications 1 à 5, dans laquelle la composition de résine de polypropylène contient un alcool dérivé d'un amorceur de polymérisation radicalaire.

7. Méthode selon la revendication 6, dans laquelle l'alcool dérivé d'un amorceur de polymérisation radicalaire est un ou plusieurs choisis dans le groupe constitué par l'alcool t-butylique et l'isopropanol.

8. Méthode selon l'une quelconque des revendications 1 à 7, dans laquelle la composition de résine de polypropylène est produite par une méthode pour produire une composition de résine de polypropylène comprenant une étape de malaxage à l'état fondu d'une résine de polypropylène, d'un ou plusieurs monomères choisis dans le groupe constitué par les composés diènes conjugués et les composés vinylaromatiques, et d'un amorceur de polymérisation radicalaire à une température à laquelle la résine de polypropylène fond et l'amorceur de polymérisation radicalaire se décompose, et d'extrusion du mélange malaxé à l'état fondu.

9. Méthode selon la revendication 8, dans laquelle la résine de polypropylène est un homopolymère de propylène.

10. Méthode selon la revendication 8 ou 9, dans laquelle un indice de fluage de la résine de polypropylène est de 1 g/10 minutes ou plus et 20 g/10 minutes ou moins, dans laquelle l'indice de fluage est mesuré conformément à la description.

11. Méthode selon l'une quelconque des revendications 8 à 10, dans laquelle l'amorceur de polymérisation radicalaire est un ou plusieurs choisis dans le groupe constitué par un peroxydicarbonate et un peroxyester.

12. Méthode selon l'une quelconque des revendications 8 à 11, dans laquelle une quantité du monomère utilisé pour 1 kg de la résine de polypropylène est de 0,04 mol ou plus et 0,14 mol ou moins.

13. Méthode selon l'une quelconque des revendications 1 à 12, dans laquelle les particules préexpansées de résine de polypropylène ont une proportion d'alvéoles ouvertes de 10,5 % ou moins, dans laquelle la proportion d'alvéoles ouvertes est mesurée conformément à la description.

14. Méthode pour produire un article en résine de polypropylène moulé dans un moule, comprenant une étape d'obtention d'un article en résine de polypropylène moulé dans un moule par moulage à la vapeur des particules préexpansées en résine de polypropylène obtenues au moyen de la méthode selon l'une quelconque des revendications 1 à 13.

15. Méthode selon la revendication 14, dans laquelle la pression de vapeur utilisée dans le moulage à la vapeur est de 0,40 MPa ou moins.
